# EUROPEAN PATENT SPECIFICATION

(11) **EP 1 407 277 B1**
(45) Date of publication and mention of the grant of the patent: **30.05.2012**
(21) Application number: 02723459.0
(22) Date of filing: 15.03.2002
(51) Int. Cl.: G01N 35/10, G01N 35/00

(54) **METHOD AND SYSTEM FOR SAMPLE ALIQUOT STORAGE**
VORRICHTUNG UND VERFAHREN ZUR TEILPROBENAUFBEWAHRUNG
PROCEDE ET SYSTEME DE STOCKAGE D'ALIQUOTE D'ECHANTILLON

(30) Priority: 18.07.2001 US 908169
(43) Date of publication of application: 14.04.2004
(73) Proprietor: Beckman Coulter, Inc., Brea, CA 92821 (US)
(72) Inventor: QURESHI, Humayun, Eden Prairie, MN 55347 (US); SPIESS, Bernard, Minnetonka, MN 55345 (US); WEISS, Robert, A., Victoria, MN 55386 (US); WERNESS, Peter, G., Carver, MN 55315 (US); WILSON, Brian, D., Chaska, MN 55318 (US); LASKA, Ronald, C., Minnetonka, MN 55343 (US)
(74) Representative: Müller-Boré & Partner Patentanwälte
(86) International application number: PCT/US2002/007995
(87) International publication number: WO 2003/008980

(56) References cited:
- WO-A2-02/075323
- US-A- 4 834 944
- US-A- 5 178 833
- US-A- 5 250 440
- US-A- 5 305 650
- US-A- 5 358 691
- US-A- 5 730 938
- US-A- 5 979 250

## Description

### Background of the Invention

### Area of the Art

The present invention relates generally to automated immunochemistry instruments and methodologies, and more particularly to methods and systems for sample aliquot storage used in connection with automated immunochemistry instruments.

### Description of the Prior Art

Automated immunochemistry instruments are widely used in clinical chemistry sampling and analyzing applications for performing various assays. Such automated immunochemistry instruments often incorporate a sample aliquot unit for aliquoting samples to be analyzed. The following references are found to be pertinent to the field of the present invention:
United States Patent No. 3,607,099 issued to Scordato *et. al.;*
United States Patent No. 4,166,094 issued to Froehlich et al.;
United States Patent No. 4,363,245 issued to Schmid;
United States Patent No. 5,182,083 issued to Barker et al.;
United States Patent No. 5,204,269 issued to Barker et al.;
United States Patent No. 5,229,074 issued to Heath et al. ("Heath '074 Patent");
United States Patent No. 5,236,666 issued to Hullette et al.;
United States Patent No. 5,350,564 issued to Mazza et al.;
United States Patent No. 5,366,896 issued to Margrey et al.;
United States Patent No. 5,580,524 issued to Forrest et al. ("Forrest '524 Patent");
United States Patent No. 5,587,129 issued to Kurosaki et al.;
United States Patent No. 5,597,733 issued to Bell et al. ("Bell '733 Patent");
United States Patent No. 5,646,046 issued to Fischer et al.*;*
United States Patent No. 5,670,120 issued to Degenhardt et al.*;*
United States Patent No. 5,814,277 issued to Bell et al. ("Bell '277 Patent"); and
United States Patent No. 5,989,499 issued to Catanzariti et al.

The Forrest '524 Patent disclosed an automated multi-test capability assay apparatus in modular form for the non-sequential processing of samples for the assay. The apparatus includes a device for ensuring solid phase suspension which includes a housing, a rotatable support having means for independently rotatably mounting a vessel around a circumference of the support, and a drive wheel for rotating the mounted vessel, where the housing includes a driving surface having longer circumferential dimensions than the drive wheel and surrounding the drive wheel and engageable therewith.

The Kurosaki '129 Patent disclosed an apparatus for automatically analyzing a specimen. The apparatus includes a first dispensing means for dispensing the specimen in a sample vial into a stock vial, a second dispensing means for dispensing the specimen in the stock vial into an assay vial, and a third dispensing means for dispensing the reagent into the assay vial. A cooling device is provided below a stock vial turntable for cooling the specimens contained in the stock vials.

US-A-4 834 944 discloses a method of automated immunochemistry whereby the method comprises the steps of:
- aliquoting sample aliquot to empty sample vessels on a sample storage wheel
- storing that sample vessels in a chilled environment on said sample storage wheel
- transporting said sample vessels containing sample aliquots to a multiplicity of reagent pipetting stations and
- aspirating sample aliquots from said sample vessels for subsequent assay.

This document further discloses a multiplicity of independent reagent pipetting stations, one pipetting station being the pipetting station for transferring samples from a cassette into a storage wheel of transport means and the other pipetting station being the pipetting station for transferring samples from said storage wheel of said transport means to a storage wheel of a measuring turret table. One pipetting station aspirates samples from the sample vessels at a certain position, while another pipetting station only discharges samples to sample vessels on said storage wheel.

WO 93/12431 discloses two pipettes that perform two different tasks. One pipette is optimized for relatively high volume of fluid transfer and the other is optimized for relatively small volume of fluid transfer.

WO 02/075323 published on September 26, 2002 claiming the priority date of March 16, 2001 discloses a method and a system for automated immunochemistry analysis. The basic structural and functional modules of the automated immunochemistry analyzer comprise a sample presentation unit, a main sample pipetting station, first and second dual pipetting stations, first, second, and third pick-and-place grippers and a chilled sample storage. The operations of the analyzer are supported by necessary fluid systems, electronic control hardware and software comprising among others motors and driving mechanisms.

The Heath '074 Patent, the Bell '733 Patent, and the Bell '277 Patent also disclosed various arrangements of using a turntable with a cooler for cooling the samples and reagent contained in the turntable.

While various sample aliquot units for automated immunochemistry instruments have been developed, as disclosed in the above references, there is still a need to create and develop a new sample aliquot and storage unit that can accommodate the following two new emerging trends that are evolving in the clinical laboratory. First, there is an increase in the use of automatic sample reflex testing. Second, the laboratory automation has increased the demands for the quick release of sample tubes. These two new trends require new sample aliquot units to be capable of storing the samples for reflex testing, while supporting the high throughput of the automated immunochemistry instruments.

### Summary of the Invention

The present invention is directed to a new method and system of sample aliquot storage for an automated immunochemistry instrument.

It is one of the primary objects of the present invention to provide a new method and system of sample aliquot storage for an automated immunochemistry instrument that is capable of performing automatic sample reflex testing.

It is also a primary object of the present invention to provide a new method and system of sample aliquot storage for an automated immunochemistry instrument that is capable of having a higher throughput.

It is another primary object of the present invention to provide a new method and system of sample aliquot storage for an automated immunochemistry instrument that is capable of working with multiple pipetting modules for running different samples simultaneously.

In addition, it is a primary object of the present invention to provide a new method and system of sample aliquot storage for an automated immunochemistry instrument that ensures sample integrity and low evaporation by incorporating an enclosed large capacity chilled sample storage area.

These and other objects and advantages may be achieved by a sample aliquot storage system of the present invention. In accordance with the embodiment of the present invention, a sample aliquot storage system of the present invention, which is used as part of an automated immunochemistry instrument, has a chilled storage for storing multiple sample vessels containing aliquoted samples that may be used for reflex testing. The sample vessels containing aliquoted samples can be moved to one of the multiple independent pipetting stations. Each of the multiple independent pipetting stations has a pipettor for aspirating a required amount of sample from the sample vessels and dispensing it into an reaction vessel. This allows the immunochemistry instruments to run different samples simultaneously (while their respective cycles are offset in time).

Such an arrangement has been found to provide a number of advantages. As explained in greater detail below, the new method and system of sample aliquot storage of the present invention support automatic reflex testing of the samples as well as a high throughput of the automated immunochemistry instrument.

The new method and system of sample aliquot storage of the present invention also allow the immunochemistry instrument with multiple pipetting stations to run different samples simultaneously.

The system of the present invention may be used in connection with other chemical analyzers, such as, but not limited to, chemistry and hematology diagnostic instrumentation.

The invention is defined in its fullest scope in the appended claims and is described below in its preferred embodiments.

### Description of the Figures

The above-mentioned and other features of this invention and the manner of obtaining them will become more apparent, and will be best understood by reference to the following description, taken in conjunction with the accompanying drawings. These drawings depict only a typical embodiment of the invention and do not therefore limit its scope. They serve to add specificity and detail, in which:
FIGURE 1 is an illustrative block diagram showing the basic structural and functional modules of an automated immunochemistry instrument incorporating the sample aliquot storage system of the present invention;
FIGURE 2 is a perspective view showing the arrangement of the main sample pipetting station of the automated immunochemistry instrument and the sample aliquot storage system of the present invention incorporated in the automated immunochemistry instrument; and
FIGURE 3 is an exploded perspective view showing the arrangement of the sample aliquot chiller assembly of the sample aliquot storage system of the present invention.
FIGURE 4 is a side sectional view of one embodiment of the sample aliquot storage unit of the present invention.

### Detailed Description of the Invention

The present invention is directed to a new method and system of sample aliquot storage for an automated immunochemistry instrument. The new system of the present invention includes a sample aliquot storage unit incorporated in the automated immunochemistry instrument, and the method of the present invention includes the procedures for storing and transporting sample vessels containing sample aliquots to be automatically reflex tested by the automated immunochemistry instrument.

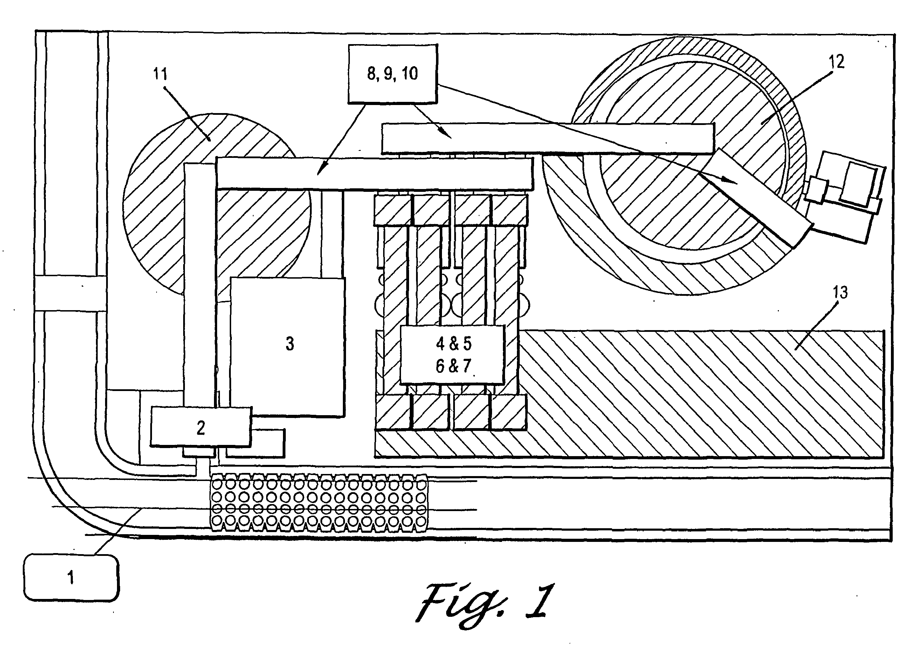

Referring to Figure 1, there is shown an illustrative block diagram demonstrating the basic structural and functional modules of the automated immunochemistry instrument, incorporating the sample aliquot storage of the present invention.

As shown in Figure **1**, the basic structural and functional modules of the automated immunochemistry instrument include a sample presentation unit **1**, a main sample aliquoting station **2**, a bulk vessel feeder **3**, first dual reagent pipetting stations **4** and **5**, second dual reagent pipetting stations **6** and **7**, first pick-and-place gripper **8**, a second pick-and-place gripper **9**, a third pick-and-place gripper **10**, a sample aliquot storage unit **11** of the present invention, an incubator/wash/read station **12**, and a reagent storage **13**.

The sample presentation unit **1** is used to transport the entire required test samples to and from the main sample aliquoting station **2**. However, it should be understood that other lab automation systems or automated track conveyance systems may also used as long as they are capable of transport the entire required test samples to and from the main sample aliguoting station 2.

The main sample aliquoting station **2** is used to aspirate sample aliquots out of the sample tubes and dispense them into sample vessels supplied by the bulk vessel feeder **3**. However, it should be understood that other vessel supply mechanism that is capable of supplying sample vessels may also be used for the purpose of the present invention.

The four reagent pipetting stations **4, 5, 6,** and **7** are used to mix sample aliquots with reagents for the subsequent assay. The four reagent pipetting stations **4, 5, 6,** and **7** are arranged as two dual reagent pipetting stations and are independent to each other, each having its own fluid pumps and valves, wash towers, reaction vessel carriages, and pipettor. The individual structures and functions of each of these reagent pipetting stations **4, 5, 6,** and **7** conform to existing arrangements used in the Access Instruments (Beckman Coulter, Inc., CA), which are known to those of ordinary skill in the art, and therefore will not be described in detail here.

The three vessel pick-and-place grippers **8, 9,** and **10** are used to transport sample and reaction vessels among the various modules of the automated immunochemistry instrument. The first pick-and-place gripper **8** is used to transport sample vessels among the bulk vessel feeder **3**, the sample aliquot storage unit **11**, and the reagent pipetting stations **4, 5, 6,** and **7**. The second pick-and-place gripper **9** is used to transport reaction vessels between the reagent pipetting stations **4, 5, 6,** and **7** and the incubator of the incubator/wash/read station **12**. The third pick-and-place gripper **10** is used to transport reaction vessels between the incubator wheel and the wash wheel of the incubator/wash/read station **12**. However, it should be understood that other pick-and-place mechanism that is capable of transporting sample and reaction vessels among the various modules of the automated immunochemistry instrument is also contemplated for the purpose of the present invention.

The sample aliquot storage unit **11** of the present invention is used for storing the sample aliquots contained in the sample vessels in a controlled environment enclosure at a low temperature for a certain period of time, *e.g*., up to three (3) hours, so that the samples may be used for reflex testing. When a test is requested on a patient sample, the test outcome may drive a request for additional testing. This automatic request for additional tests is reflex testing.

The time delay from the first aspiration to knowing if another test will be started can range to as long as 45 minutes or more. To hold a sample tube for such a period of time prevents the sample from being used in other places. If the tube is passed to other instruments, it may be difficult for a laboratory technician to find the tube and reload it on the instrument requesting the reflex test.

To allow a single quick sample draw on sample tubes that might require reflex testing, a single aspiration (aliquot) can be taken with sufficient test material for the possible reflex test(s). However, to insure that the test materials do not evaporate or deteriorate, the sample aliquots need to be enclosed and refrigerated on board the automated immunochemistry instrument.

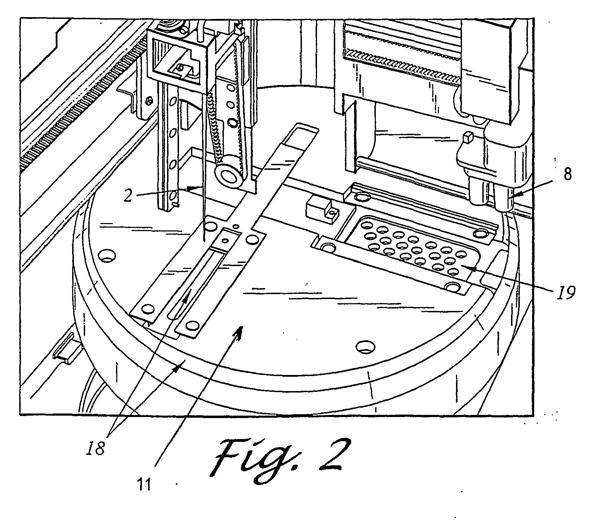

Referring to Figure 2, there is shown the arrangement of the main sample aliquoting station **2** and the sample aliquot storage unit **11** of the present invention incorporated in the automated immunochemistry instrument. The pipettor of the main sample aliquoting station **2** first aspirates sample aliquots from the sample tubes presented by a sample presentation mechanism, such as the sample presentation unit or a lab automation conveyance system (not shown in figure 2), and then moves into a position above the sample aliquot storage unit **11**. Meanwhile, the sample aliquot storage unit **11** receives an empty sample vessel from the bulk vessel feeder 3 by the pick-and-place gripper **8**, and moves the empty sample vessel under the pipettor of the main sample aliquoting station **2**. The aspirated sample aliquot is then dispensed into the empty sample vessel. Insulation and doors **18** are provided to control the environment in the chilled sample storage **11**.

The sample aliquot storage unit **11** has a precision controlled and refrigerated (chilled)sample aliquot storage wheel **19** with multiple storage locations capable of receiving and transferring sample vessels for or filled with sample aliquots.

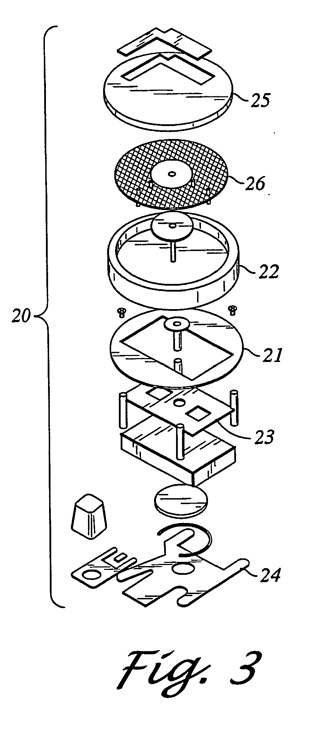

Referring to Figure 3, there is shown an arrangement of the sample aliquot chiller assembly **20** of the sample aliquot storage unit **11** of the present invention incorporated into the automated immunochemistry instrument. The construction of the sample aliquot chiller assembly **20** utilizes Peltier coolers **21** connected to a cold plate **22** and a heatsink **23**. Heat is removed by blowing air over the heatsink **23**. These components are mounted on a base **24** and insulated with covers and doors **25**. Sample vessels containing sample aliquots are stored within the cooled area on a closed spaced storage plate **26** and kept in the cool environment until needed for testing or reflex testing.

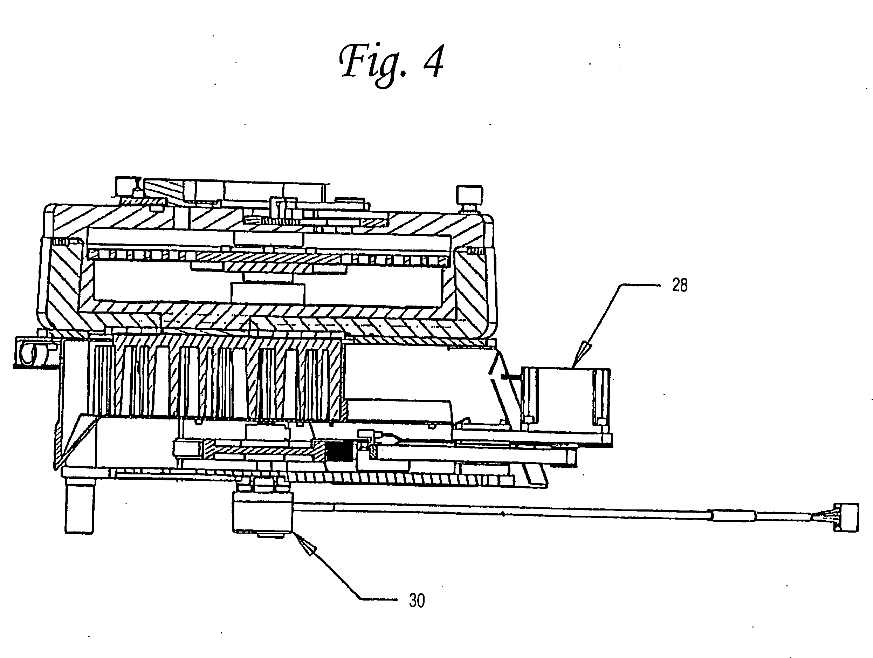

Referring to Figure 4, the sample aliquote storage unit further includes means for driving and controlling said sample storage wheel to position said sample vessels for access by the pipettor of the sample aliquoting station and the pick-and-place gripper. In accordance with one embodiment of the present invention, the driving and controlling means of said sample aliquot storage unit comprises a stepper motor 28 and an encoder 30 to accurately position the storage wheel.

The incubator/wash/read station **12** is used for the incubating, washing, and reading steps of the assays. It may include one or more incubators, washers, and readers, such as a photomultiplier tube (PMT) detector. The individual structures and functions of each of these units conform to existing arrangements of the Access Instruments (commercially available from Beckman Coulter, Inc., CA), which are known to those of ordinary skill in the art, and therefore will not be described in detail here.

The reagent storage **13** is used for storing reagents used for the assays. It serves as the means for an operator to load reagent packs into the automated immunochemistry instrument. The reagent storage **13** includes a mechanism for transporting and sorting multiple reagent packs. Other structures and functions of the reagent storage 13 conform to existing arrangements known to those of ordinary skill in the art, and therefore will not be described in detail here.

The basic operating procedures of the sample aliquot storage unit 11 of the present invention incorporated in the automated immunochemistry instrument for sample aliquot storage and reflex testing include the following steps:
1. Loading a sample tube containing a sample to be assayed to the sample presentation unit or a sample tube presented by a lab automation conveyance system;
2. Aspirating an aliquot of the sample from the sample tube by a pipettor of the sample pipetting station;
3. Placing an empty sample vessel on the sample storage wheel of the sample aliquot storage unit;
4. Positioning the empty sample vessel under the sample pipettor to receive the sample aliquot;
5. Storing the sample vessel containing sample aliquot in a chilled environment on the sample storage wheel;
6. Moving the sample vessel containing sample aliquot to one of the reagent pipetting stations by a pick-and-place gripper;
7. Aspirating an adequate amount of sample aliquot from the sample vessel for performing an assay;
8. Moving the sample vessel containing remaining sample aliquot back to the chilled sample storage wheel by the pick-and-place gripper;
9. Storing the sample vessel containing remaining sample aliquot in the chilled environment on the sample storage wheel for reflex testing;
10. When reflex testing is required, moving the sample vessel containing remaining sample aliquot to one of the reagent pipetting stations by the pick-and-place gripper;
11. Aspirating an adequate amount of sample aliquot from the sample vessel for performing the reflex testing; and
12. If there is still sample aliquot remaining and further reflex testing may be required, then moving the sample vessel containing remaining sample aliquot back to the chilled sample storage wheel for storage in the chilled environment.
13. Once it is determined that there is no further testing required on the sample aliquot, the sample vessel and any unused sample is moved to a waste container by the pick-and-place gripper.

The method and system of sample aliquot storage of the present invention for automated immunochemistry instrument has many novel and unique features and advantages. It provides the capability of performing reflex testing with a large capacity chilled sample storage area. It also supports a high throughput of the automated immunochemistry instrument. It further enables the automated immunochemistry instrument with multiple independent reagent pipetting stations to run different samples simultaneously, while their respective cycles are offset in time.

A very important novel feature of the method and system of sample aliquot storage of the present invention is that, unlike in certain prior art systems where the sample vessels are always kept in the storage wheel and are pipetted in the storage wheel, in the present invention method and system, the sample vessels containing sample aliquots are transported to one of the multiplicity of reagent pipetting stations for pipetting. This transfer significantly increases the throughput of the instrument. For example, if the pipetting process takes 36 seconds, the prior art method and system will take 36 seconds to perform pipetting of each sample vessel. If there are 4 different samples to be assayed, then the total time needed to complete the pipetting process of all 4 sample vessels would be 144 seconds.

In the present invention method and system, the same task can be finished in 63 seconds. This is because in the present invention method and system, the sample vessels are transported to one of the 4 reagent pipetting stations for pipetting. These reagent pipetting, stations are staggered, for example, 9 seconds apart (which is the time needed for the pick-and-place gripper to transport one sample vessel to a reagent pipetting station). As the first sample vessel is pipetted at the first reagent pipetting station, the second sample vessel is transported to the second reagent pipetting station after 9 seconds. After another 9 seconds, the third sample vessel is transported to the third reagent pipetting station. Finally, after the third 9 seconds, the fourth sample vessel is transported to the fourth reagent pipetting station. Since it takes 36 seconds to finish the pipetting process of the fourth sample vessel, the total time used for pipetting all 4 sample vessels in this example is only 63 seconds, which reduces more than half of the 144 seconds needed for the prior art method and system.

The foregoing is meant to illustrate, but not to limit, the scope of the invention. Indeed, those of ordinary skill in the art can readily envision and produce further embodiments, based on the teachings herein, without undue experimentation.

It is to be understood that the form of the system depicted in Figures 1 through 3 has been chosen only for the purpose of describing a particular embodiment and function of the invention, and that the arrangement of the invention can be addressed in various ways and incorporated in other types of devices, all of which will be evident to those working in the art.

It is to be understood that the particular arrangement of the present invention may vary, depending on the chemical analyzer instrument it is incorporated or working together with, but that the determination of necessary variation is well within the skill in the art in view of the instant disclosure.

Suitable components that are commercially available would be known to those of ordinary skill in the art in view of this disclosure.

It is further understood that any comparable means of accomplishing this goal is within the scope of this invention.

The present invention may be embodied in other specific forms without departing from its essential characteristics. The described embodiment is to be considered in all respects only as illustrative and not as restrictive. The scope of the invention is, therefore, indicated by the appended claims rather than by the foregoing description. All changes which come within the meaning and range of the equivalence of the claims are to be embraced within their scope.

## Claims

1. An apparatus for automated immunochemistry or chemistry analysis, comprising:
a. a sample aliquot storage unit (11) having a sample storage wheel (19) for storing sample vessels;
b. a sample aliquoting station (2) having a sample pipettor for aliquoting samples to said sample vessels on said sample storage wheel (19) ;
c. said sample aliquot storage unit, further having a chiller assembly (20) for keeping said sample vessels containing sample aliquots in a chilled environment on said sample storage wheel;
d. a multiplicity of independent reagent pipetting stations (4, 5, 6, 7) for aspirating a required amount of sample from said sample vessels;
e. said sample aliquot storage unit, further having a stepper motor (28) and encoder (30) for driving and controlling said sample storage wheel (19) to position said sample vessels for access by said pipettor of said sample aliquoting station;
f. a pick-and-place mechanism (8, 9, 10) for transporting said sample vessels containing said sample aliquots to said multiplicity of independent reagent pipetting stations (4, 5, 6, 7) respectively for sample aspiration of subsequent assay; and
g. said pick-and-place mechanism (8, 9, 10) also for transporting said sample vessels containing remaining sample aliquots back to said sample storage wheel (19) to be stored in said chilled environment for reflex testing;
h. the apparatus being configured such that as each sample vessel starts being pipetted at its corresponding reagent pipetting station, the transport of the next sample vessel begins, and said next sample vessel starts being pipetted at its corresponding pipetting station before the pipetting of said previous sample vessel ends, so that reagent pipetting operations of said sample vessels partially overlap in time.

2. The apparatus as defined in claim 1, wherein said sample pipettor of said sample aliquoting station (2) aspirates samples from sample tubes loaded by a sample presentation unit.

3. The apparatus as defined in claim 1, wherein said sample pipettor of said sample aliquoting station (2) aspirates samples directly from sample tubes presented by lab automation systems or automated track conveyance systems.

4. The apparatus as defined in claim 1, wherein said pick-and-place mechanism (8, 9, 10) also transports empty sample vessels from a bulk vessel feeder to said sample storage wheel.

5. The apparatus as defined in claim 1, wherein said chiller assembly (20) of said sample aliquot storage unit (11) comprises a top cover with openings for access of said sample vessels by both said pipettor of said sample aliquoting station (2) and said pick-and-place mechanism (8, 9, 10).

6. The apparatus as defined in claim 1, wherein said chiller assembly (20) of said sample aliquot storage unit (11) comprises a cold plate for establishing and maintaining said chilled environment.

7. The apparatus as defined in claim 1, wherein said chiller assembly (20) of said sample aliquot storage unit (11) comprises insulation for establishing and maintaining said chilled environment.

8. The apparatus as defined in claim 1, wherein said chiller assembly (20) of said sample aliquot storage unit (11) comprises cooler members for establishing and maintaining said chilled environment.

9. The apparatus as defined in claim 1, wherein said chiller assembly (20) of said sample aliquot storage unit (11) comprises a heatsink for establishing and maintaining said chilled environment.

10. The apparatus as defined in claim 1, wherein said sample aliquot storage unit (11) further comprises a base.

11. The apparatus as defined in one of the claims 1 - 10, wherein operation of said multiplicity of independent reagent pipetting stations (4, 5, 6, 7) are staggered by a predetermined time period.

12. A method of automated immunochemistry or chemistry analysis, comprising the steps of:
a. aliquoting the sample aliquots to sample vessels;
b. storing said sample vessels containing the sample aliquots in a chilled environment in a sample aliquot storage unit (11);
c. transporting said sample vessels containing the sample aliquots to a multiplicity of reagent pipetting stations (4, 5, 6, 7) respectively for sample aspiration for subsequent assay; and
d. transporting said sample vessels containing remaining sample aliquots back to said chilled sample aliquot storage unit (11) for storage in said chilled environment for reflex testing;
performing pipetting operations of said sample vessels such that, as each sample vessel starts being pipetted at its corresponding reagent pipetting station, the transport of the next sample vessel begins, and said next sample vessel starts being pipetted at its corresponding pipetting station before the pipetting of said previous sample vessel ends, so that reagent pipetting operations of said sample vessels partially overlap in time.

13. The method as defined in claim 12, further comprising the step of aspirating samples from sample tubes.

14. The method as defined in claim 12, further comprising the step of placing empty sample vessels in said sample aliquot storage unit (11) for receiving sample aliquots.

15. The method as defined in claim 12, further comprising the step of transporting said sample vessels containing remaining sample aliquots from said chilled sample aliquot storage unit (11) to said multiplicity of reagent pipetting stations (4, 5, 6, 7)respectively for reflex testing.

16. The method as defined in claim 12, further comprising the step of transporting said sample vessels back from said multiplicity of reagent pipetting stations (4, 5, 6, 7) to said chilled sample aliquot storage unit (11) for storage in said chilled environment if there are still adequate amount of sample aliquots left in said sample vessels for additional reflex testing.

17. The method as defined in claim 12, further comprising the step of transporting said sample vessels from said chilled sample aliquot storage unit (11) to the waste location.

18. The method as defined in claim 12, further comprising the step of staggering the operation of said multiplicity of independent reagent pipetting stations (4, 5, 6, 7) by a predetermined time period.

## Patentansprüche

1. Vorrichtung für die automatisierte immunchemische oder chemische Analyse, die umfasst:
a. eine Teilprobenaufbewahrungseinheit (11) mit einem Probenaufbewahrungskarussel (19) zum Aufbewahren von Probengefäßen;
b. eine Probenaufteilungsstation (2) mit einer Probenpipettierhilfe zum Aufteilen von Proben auf die Probengefäße auf dem Probenaufbewahrungskarussel (19);
c. wobei die Teilprobenaufbewahrungseinheit ferner eine Kälteanordnung (20) hat, um die Probengefäße, welche die Teilproben enthalten, in einer gekühlten Umgebung auf dem Probenaufbewahrungskarussel zu halten;
d. eine Vielzahl unabhängiger Reagenspipettierstationen (4, 5, 6, 7) zum Ansaugen einer erforderlichen Probenmenge aus den Probengefäßen;
e. wobei die Teilprobenaufbewahrungseinheit ferner einen Schrittmotor (28) und einen Impulsgeber (30) zum Antreiben und Steuern des Probenaufbewahrungskarussels (19) hat, um die Probengefäße zu den Zugriff durch die Pipettierhilfe der Probenaufteilungsstation zu positionieren;
f. einen Bestückungsmechanismus (8, 9, 10) zum Transportieren der Probengefäße, die die Teilproben enthalten, jeweils an die Vielzahl unabhängiger Reagenspipettierstationen (4, 5, 6, 7) zum Probenansaugen und anschließenden Untersuchen; und
g. wobei der Bestückungsmechanismus (8, 9, 10) auch zum Transportieren der Probengefäße, die restliche Teilproben enthalten, zurück zu dem Probenaufbewahrungskarussel (19) dient, um für Reflextests in der gekühlten Umgebung aufbewahrt zu werden;
h. wobei die Vorrichtung derart konfiguriert ist, dass, wenn jedes Probengefäß beginnt, an seiner entsprechenden Reagenspipettierstation pipettiert zu werden, der Transport des nächsten Probengefäßes beginnt, und das nächste Probengefäß beginnt, an seiner entsprechenden Pipettierstation pipettiert zu werden, bevor das Pipettieren des vorhergehenden Probengefäßes beendet ist, so dass die Reagenspipettierarbeitsgänge der Probengefäße sich zeitlich teilweise überlappen.

2. Vorrichtung nach Anspruch 1, wobei die Probenpipettierhilfe (2) der Probenaufteilungsstation (2) Proben aus Probenröhrchen ansaugt, die von einer Probenpräsentationseinheit geladen werden.

3. Vorrichtung nach Anspruch 1, wobei die Probenpipettierhilfe (2) der Probenaufteilungsstation (2) Proben direkt aus Probenröhrchen ansaugt, die von automatisierten Laborsystemen oder automatisierten Schienenfördersystemen präsentiert werden.

4. Vorrichtung nach Anspruch 1, wobei der Bestückungsmechanismus (8, 9, 10) auch leere Probengefäße von einer Großmengen-Gefäßbeschickungsvorrichtung zu dem Probenaufbewahrungskarussel transportiert.

5. Vorrichtung nach Anspruch 1, wobei die Kälteanordnung (20) der Teilprobenaufbewahrungseinheit (11) eine obere Abdeckung mit Öffnungen für den Zugriff auf die Probengefäße sowohl durch die Pipettierhilfe der Probenaufteilungsstation (2) als auch den Bestückungsmechanismus (8, 9, 10) umfasst.

6. Vorrichtung nach Anspruch 1, wobei die Kälteanordnung (20) der Teilprobenaufbewahrungseinheit (11) eine kalte Platte zum Herstellen und Aufrechterhalten der gekühlten Umgebung umfasst.

7. Vorrichtung nach Anspruch 1, wobei die Kälteanordnung (20) der Teilprobenaufbewahrungseinheit (11) eine Isolierung zum Herstellen und Aufrechterhalten der gekühlten Umgebung umfasst.

8. Vorrichtung nach Anspruch 1, wobei die Kälteanordnung (20) der Teilprobenaufbewahrungseinheit (11) Kühlerelemente zum Herstellen und Aufrechterhalten der gekühlten Umgebung umfasst.

9. Vorrichtung nach Anspruch 1, wobei die Kälteanordnung (20) der Teilprobenaufbewahrungseinheit (11) eine Wärmesenke zum Herstellen und Aufrechterhalten der gekühlten Umgebung umfasst.

10. Vorrichtung nach Anspruch 1, wobei die Teilprobenaufbewahrungseinheit (11) ferner eine Basis bzw. einen Sockel umfasst.

11. Vorrichtung nach einem der Ansprüche 1 - 10, wobei der Betrieb der Vielzahl unabhängiger Reagenspipettierstationen (4, 5, 6, 7) um eine vorgegebene Zeitspanne versetzt ist.

12. Verfahren für die automatisierte immunchemische oder chemische Analyse, das umfasst:
a. Zuteilen der Teilproben auf Probengefäße;
b. Aufbewahren der Probengefäße, die die Teilproben enthalten, in einer gekühlten Umgebung in einer Teilprobenaufbewahrungseinheit (11);
c. Transportieren der Probengefäße, die die Teilproben enthalten, jeweils zu einer Vielzahl von Reagenspipettierstationen (4, 5, 6, 7) zum Probenansaugen und anschließenden Untersuchen; und
d. Transportieren der Probengefäße, die restliche Teilproben enthalten, zurück zu der gekühlten Teilprobenaufbewahrungseinheit (11) zur Aufbewahrung in der gekühlten Umgebung für Reflextests;
Durchführen von Pipettierarbeitsgängen an den Probengefäßen derart, dass, wenn jedes Probengefäß beginnt, an seiner entsprechenden Reagenspipettierstation pipettiert zu werden, der Transport des nächsten Probengefäßes beginnt, und das nächste Probengefäß beginnt, an seiner entsprechenden Pipettierstation pipettiert zu werden, bevor das Pipettieren des vorhergehenden Probengefäßes beendet ist, so dass die Reagenspipettierarbeitsgänge der Probengefäße sich zeitlich teilweise überlappen.

13. Verfahren nach Anspruch 12, das ferner den Schritt des Ansaugens von Proben aus Probenröhrchen umfasst.

14. Verfahren nach Anspruch 12, das ferner den Schritt des Anordnens leerer Probengefäße in der Teilprobenaufbewahrungseinheit (11) zum Aufnehmen von Teilproben umfasst.

15. Verfahren nach Anspruch 12, das ferner den Schritt des Transportierens der Probengefäße, die restliche Teilproben enthalten, von der gekühlten Teilprobenaufbewahrungseinheit (11) jeweils zu der Vielzahl von Reagenspipettierstationen (4, 5, 6, 7) für Reflextests umfasst.

16. Verfahren nach Anspruch 12, das ferner den Schritt des Transportierens der Probengefäße von der Vielzahl von Reagenspipettierstationen (4, 5, 6, 7) zurück zu der gekühlten Teilprobenaufbewahrungseinheit (11) zum Aufbewahren in der gekühlten Umgebung umfasst, wenn es noch eine ausreichende Menge an Teilproben, die in den Probengefäßen für Reflextests übrig sind, gibt.

17. Verfahren nach Anspruch 12, das ferner den Schritt des Transportierens der Probengefäße von der gekühlten Teilprobenaufbewahrungseinheit (11) zu der Abfallstelle umfasst.

18. Verfahren nach Anspruch 12, das ferner den Schritt des um eine vorgegebene Zeitspanne versetzten Betriebs der Vielzahl der unabhängigen Reagenspipettierstationen (4, 5, 6, 7) umfasst.

## Revendications

1. Appareil pour immunochimie ou analyse chimique automatisées, comprenant :
a. une unité de stockage d'aliquotes d'échantillons (11) comportant une roue de stockage d'échantillons (19) pour stocker des cuves d'échantillons ;
b. une station d'aliquotage d'échantillons (2) comportant un pipetteur d'échantillons pour aliquoter des échantillons vers lesdites cuves d'échantillons sur ladite roue de stockage d'échantillons (19) ;
c. ladite unité de stockage d'aliquotes d'échantillons, équipée en outre d'un groupe frigorifique (20) pour maintenir lesdites cuves d'échantillons contenant des aliquotes d'échantillons dans un environnement réfrigéré sur ladite roue de stockage d'échantillons ;
d. une multiplicité de stations indépendantes de pipettage de réactif (4, 5, 6, 7) pour aspirer une quantité requise d'échantillon dans lesdites cuves d'échantillons ;
e. ladite unité de stockage d'aliquotes d'échantillons, équipée en outre d'un moteur pas-à-pas (28) et d'un encodeur (30) pour entraîner et commander ladite roue de stockage d'échantillons (19) et positionner lesdites cuves d'échantillons afin qu'elles soient accessibles audit pipetteur de ladite station d'aliquotage d'échantillons ;
f. un mécanisme bras-transfert (8, 9, 10) pour transporter lesdites cuves d'échantillons contenant lesdites aliquotes d'échantillons vers ladite multiplicité de stations indépendantes de pipettage de réactif (4, 5, 6, 7) respectivement pour l'aspiration d'échantillon de l'analyse subséquente ; et
g. ledit mécanisme bras-transfert (8, 9, 10) pour ramener également lesdites cuves d'échantillons contenant des aliquotes d'échantillons restantes vers ladite roue de stockage d'échantillons (19) afin qu'elles soient stockées dans ledit environnement réfrigéré en vue des tests reflexes ;
h. l'appareil étant configuré de telle sorte que lorsque chaque cuve d'échantillon commence à être pipettée au niveau de sa station de pipettage de réactif correspondante, le transport de la cuve d'échantillons suivante commence, et ladite cuve d'échantillons suivante commence à être pipettée au niveau de sa station de pipettage correspondante avant que le pipettage de ladite cuve d'échantillons précédente se termine, de sorte que les opérations de pipettage de réactif desdites cuves d'échantillons se chevauchent partiellement dans le temps.

2. Appareil selon la revendication 1, dans lequel ledit pipetteur d'échantillons de ladite station d'aliquotage d'échantillons (2) aspire des échantillons dans les tubes d'échantillons chargés par une unité de présentation d'échantillons.

3. Appareil selon la revendication 1, dans lequel ledit pipetteur d'échantillons de ladite station d'aliquotage d'échantillons (2) aspire des échantillons directement dans des tubes d'échantillons présentés par des systèmes d'automation de laboratoire ou des systèmes de convoyeurs automatisés.

4. Appareil selon la revendication 1, dans lequel ledit mécanisme bras-transfert (8, 9, 10) transporte également des cuves d'échantillons vides d'un distributeur de cuves vrac à ladite roue de stockage d'échantillons.

5. Appareil selon la revendication 1, dans lequel ledit groupe frigorifique (20) de ladite unité de stockage d'aliquotes d'échantillons (11) comprend un couvercle supérieur avec des ouvertures permettant l'accès auxdites cuves d'échantillons à la fois par ledit pipetteur de ladite station d'aliquotage d'échantillons (2) et ledit mécanisme bras-transfert (8, 9, 10).

6. Appareil selon la revendication 1, dans lequel ledit groupe frigorifique (20) de ladite unité de stockage d'aliquotes d'échantillons (11) comprend une plaque froide pour instaurer et maintenir ledit environnement réfrigéré.

7. Appareil selon la revendication 1, dans lequel ledit groupe frigorifique (20) de ladite unité de stockage d'aliquotes d'échantillons (11) comprend une isolation pour instaurer et maintenir ledit environnement réfrigéré.

8. Appareil selon la revendication 1, dans lequel ledit groupe frigorifique (20) de ladite unité de stockage d'aliquotes d'échantillons (11) comprend des éléments refroidisseurs pour instaurer et maintenir ledit environnement réfrigéré.

9. Appareil selon la revendication 1, dans lequel ledit groupe frigorifique (20) de ladite unité de stockage d'aliquotes d'échantillons (11) comprend un dissipateur thermique pour instaurer et maintenir ledit environnement réfrigéré.

10. Appareil selon la revendication 1, dans lequel ladite unité de stockage d'aliquotes d'échantillons (11) comprend en outre une base.

11. Appareil selon une des revendications 1 à 10, dans lequel les fonctionnements de ladite multiplicité de stations indépendantes de pipettage de réactif (4, 5, 6, 7) sont décalés selon une période de temps prédéterminée.

12. Procédé d'immunochimie ou analyse chimique automatisées, comprenant les étapes suivantes :
a. aliquotage des aliquotes d'échantillons vers des cuves d'échantillons ;
b. stockage desdites cuves d'échantillons contenant les aliquotes d'échantillons dans un environnement réfrigéré dans une unité de stockage d'aliquotes d'échantillons (11) ;
c. transport desdites cuves d'échantillons contenant les aliquotes d'échantillons vers une multiplicité de stations de pipettage de réactif (4, 5, 6, 7) respectivement en vue de l'aspiration d'échantillon pour l'analyse subséquente ; et
d. retour desdites cuves d'échantillons contenant les aliquotes d'échantillons restantes vers ladite unité de stockage d'aliquotes d'échantillons réfrigérée (11) pour le stockage dans ledit environnement réfrigéré en vue des tests reflexes ;
exécution des opérations de pipettage desdites cuves d'échantillons, de telle sorte que lorsque chaque cuve d'échantillon commence à être pipettée au niveau de sa station de pipettage de réactif correspondante, le transport de la cuve d'échantillons suivante commence, et ladite cuve d'échantillons suivante commence à être pipettée au niveau de sa station de pipettage correspondante avant que le pipettage de ladite cuve d'échantillons précédente se termine, de sorte que les opérations de pipettage de réactif desdites cuves d'échantillons se chevauchent partiellement dans le temps.

13. Procédé selon la revendication 12, comprenant en outre l'étape d'aspiration des échantillons dans les tubes d'échantillons.

14. Procédé selon la revendication 12, comprenant en outre l'étape de positionnement des cuves d'échantillons vides dans ladite unité de stockage d'aliquotes d'échantillons (11) pour recevoir des aliquotes d'échantillons.

15. Procédé selon la revendication 12, comprenant en outre l'étape de transport desdites cuves d'échantillons contenant des aliquotes d'échantillons restantes depuis ladite unité de stockage d'aliquotes d'échantillons (11) vers ladite multiplicité de stations de pipettage de réactif (4, 5, 6, 7) respectivement en vue des tests reflexes.

16. Procédé selon la revendication 12, comprenant en outre l'étape de retour desdites cuves d'échantillons depuis ladite multiplicité de stations de pipettage de réactif (4, 5, 6, 7) vers ladite unité de stockage d'aliquotes d'échantillons réfrigérée (11) pour le stockage dans ledit environnement réfrigéré s'il reste toujours une quantité adéquate d'aliquotes d'échantillons dans lesdites cuves d'échantillons en vue de tests reflexes supplémentaires.

17. Procédé selon la revendication 12, comprenant en outre l'étape de transport desdites cuves d'échantillons depuis ladite unité de stockage d'aliquotes d'échantillons réfrigérée (11) vers la zone de déchets.

18. Procédé selon la revendication 12, comprenant en outre l'étape de décalage des fonctionnements de ladite multiplicité des stations indépendantes de pipettage de réactif (4, 5, 6, 7) selon une période de temps prédéterminée.
